# NEUE EUROPÄISCHE PATENTSCHRIFT

(11) **EP 0 800 059 B2**
(45) Veröffentlichungstag und Bekanntmachung des Hinweises auf die Entscheidung über den Einspruch: **05.10.2005**
(45) Hinweis auf die Patenterteilung: 30.10.2002
(21) Anmeldenummer: 97105073.7
(22) Anmeldetag: 26.03.1997
(51) Int. Cl.: G01D 5/244

(54) **Verfahren zur Übertragung von Informationen in einer Positionsmesseinrichtung**
Method of data transfer in a position measuring device
Procédé de transfert de données dans un dispositif de mesure de position

(30) Priorität: 06.04.1996 DE 19613884
(43) Veröffentlichungstag der Anmeldung: 08.10.1997
(73) Patentinhaber: Dr. Johannes Heidenhain GmbH, 83292 Traunreut (DE)
(72) Erfinder: Tondorf, Sebastian, Dr.-Ing., 83329 Waging (DE)

(56) Entgegenhaltungen:
- EP-A- 0 514 081
- EP-A- 0 555 869
- WO-A-93/05272
- DE-A- 3 907 652
- DE-A- 4 413 513

## Beschreibung

Die vorliegende Erfindung betrifft ein Verfahren zur Übertragung von Informationen zwischen der Abtasteinheit einer Positionsmeßeinrichtung und einer nachgeordneten Auswerte- und Versorgungseinheit. Gegenstand der vorliegenden Erfindung ist ferner eine entsprechende Positionsmeßeinrichtung, die zur Durchführung eines derartigen Verfahrens ausgebildet ist.

In bekannten Positionsmeßeinrichtungen, beispielsweise auf optischer Basis, erfolgt üblicherweise die Abtastung einer Maßstabsteilung mit Hilfe einer Abtasteinheit. Die Abtasteinheit liefert zunächst analoge Abtastsignale, z.B. in Sinus- oder Cosinus-Form, die zur Positionsauswertung weiterverarbeitet werden, wobei es verschiedene Möglichkeiten der Weiterverarbeitung dieser Signale gibt. Beispielsweise existieren sowohl Positionsmeßsysteme mit analogem als auch mit digitalem Signalausgang, wobei letztere bereits eine teilweise ins Meßsystem integrierte Auswerte-Elektronik aufweisen können, welche die analogen Abtastsignale verarbeitet. Daneben kann auch lediglich die Digitalisierung der analogen Abtastignale innerhalb derAbtasteinheit vorgenommen werden. Ausgangsseitig resultieren bei einem derartigen Positionsmeßsystem dann z.B. TTL-Signale, die der numerischen Steuerung einer Werkzeugmaschine zugeführt werden können.

Zu verschiedenen Zwecken ist es nunmehrfür den jeweiligen Anwender von Interesse, die ursprünglich erzeugten analogen, üblicherweise sinus- oder cosinusförmigen Abtastsignale überprüfen zu können, um derart etwa die korrekte Montage der Abtasteinheit vorzunehmen bzw. zu kontrollieren. Ferner ist eine derartige Kontrollmöglichkeit für die erzeugten analogen Abtastsignale auch im eigentlichen Meßbetrieb sinnvoll, um eventuelle System-Fehlfunktionen frühzeitig zu erkennen. Hierbei interessieren beispielsweise die Amplitude oder aber der jeweilige Signal-Offset der erzeugten analogen Abtastsignale, um derart die Signalqualität beurteilen zu können. Darüber hinaus können auch weitere meßsystem-spezifische Informationen für den Anwendervon Interesse sein, beispielsweise die Lage von Referenzmarken oder aber Informationen zum Zustand der Abtast-Lichtquelle usw..

Aus der DE 38 29 815 ist in diesem Zusammenhang eine der Abtasteinheit zugeordnete Fehlermeldeeinrichtung bekannt, die die erzeugten analogen Abtastsignale überwacht und Fehler-Erkennungssignale über eine separate Fehlersignalleitung zur nachgeordneten Auswerteeinheit überträgt. Die Aktivierung der Fehlermeldeeinrichtung erfolgt über ein definiertes Aktivierungssignal, das über die Fehlersignalleitung von der Auswerteeinrichtung an die Abtasteinheit geschickt wird. Sowohl für die Übermittlung des Aktivierungssignales als auch des eigentlichen Fehlersignales ist bei dieser Lösung mindestens eine zusätzliche Übertragungsleitung erforderlich.

Anordnungen mit ein oder mehreren derartigen Übertragungsleitungen zur Übermittlung von fehlerrelevanten Informationen bzw. der Aktivierung derselben im Zusammenhang mit den analogen Abtastsignalen sind ferner in der DE 30 10 611 sowie der DE 34 45 617 beschrieben.

Eine eventuelle Übertragung dieser Informationen auf den Signal-Übertragungsleitungen erweist sich aufgrund möglicher Signalverfälschungen ebenfalls als nachteilig.

Daneben ist bekannt, eine derartige Überprüfung der von der Abtasteinheit erzeugten, analogen Abtastsignale inklusive Fehler-Anzeige über farbige LEDs unmittelbar in der Abtasteinheit vorzunehmen; hierzu sei auf die EP 514 081 verwiesen. Nachteilig hierbei ist jedoch, daß die Informationen bezüglich der Qualität der analogen Abtastsignale nicht für eine Weiterverarbeitung in der Auswerteeinheit zur Verfügung stehen. Es ist somit nur eine relativ beschränkte Nutzung dieser Informationen, insbesondere zur korrekten Montage der Abtasteinheit möglich.

Aufgabe der vorliegenden Erfindung ist es daher, ein Verfahren sowie eine Vorrichtung zu schaffen, um mit möglichst geringem Aufwand meßsystem-bezogene Informationen einer Abtasteinheit einer Positionsmeßeinrichtung innerhalb einer Auswerteeinheit zur Verfügung zu stellen. Hierbei soll eine möglichst vielfältige Nutzung dieser Informationen ebenso möglich sein wie eine flexible Anpassung an verschiedenste Überwachungsanforderungen. Die meßsystem-bezogenen Informationen betreffen die analogen Abtastsignale, die von der Abtasteinheit erzeugt werden.

Diese Aufgabe wird gelöst durch ein Verfahren mit den Merkmalen des Anspruches 1.

Vorteilhafte Ausführungsformen des erfindungsgemäßen Verfahrens ergeben sich aus den Maßnahmen in den von Anspruch 1 abhängigen Ansprüchen.

Eine geeignete Postionsmeßeinrichtung zur Lösung der oben erwähnten Aufgabe ist Gegenstand des Anspruches 9.

Mögliche Ausführungsformen der erfindungsgemäßen Positionsmeßeinrichtung sind über die Maßnahmen in den von Anspruch 9 abhängigen Ansprüchen charakterisiert.

Erfindungsgemäß ist nunmehr vorgesehen, bereits vorhandene Verbindungsieitungen, respektive Versorgungsleitungen, zwischen der Abtasteinheit und der nachgeordneten Auswerte- und Versorgungseinheit zur Übertragung von meßsystem-bezogenen Informationen zu nutzen, die sich auf die von der Abtasteinheit erzeugten analogen Abtastsignale beziehen. Aufgrund dieser Mehrfachnutzung der Versorgungsleitungen resultiert eine vorteilhafte Reduzierung erforderlicher Verbindungsleitungen zwischen der Positionsmeßeinrichtung und der nachgeordneten Auswerteund Versorgungseinheit. Zudem können bislang übliche Standards in Verbindung mit den erforderlichen Steckverbindungen erhalten bleiben, da keine zusätzlichen Signalleitungen nötig sind.

Darüber hinaus gestattet die erfindungsgemäße Lösung auch eine äußerst flexible Anpassung an unterschiedliche Meßsysteme sowie Kontrollanforderungen seitens des Anwenders. So können die interessierenden meßsystem-bezogenen Informationen auf unterschiedlichste Art und Weise zur Übermittlung auf der bzw. den Versorgungsleitungen aufbereitet werden, beispielsweise in Form verschiedenster Modulationsverfahren etc.. Je nach Art und Umfang der zu übertragenden Informationen können hierfür mehr oder weniger aufwendige Aufbereitungsverfahren eingesetzt werden. Ebenso flexibel kann das erfindungsgemäße Verfahren bzw. die erfindungsgemäße Vorrichtung in Bezug auf die Auswertung der übertragenen Informationen ausgelegt werden. Die Anzeige kann beispielsweise in Form einer einfachen optischen Darstellung der zwei Betriebszustände "Korrekte Abtastsignalform" bzw. "Fehlerhafte Abtastsignalform" erfolgen. Darüber hinaus ist jedoch auch eine detailliertere Anzeigemöglichkeit erfindungsgemäß realisierbar.

Ferner existieren auch verschiedenste Möglichkeiten, wie die Informationen bezüglich der analogen Abtastsignale seitens der Abtasteinheit generiert werden können. Dies kann beispielsweise durch geeignetes Analysieren der eigentlichen analogen Abtastsignale ebenso erfolgen wie durch einen zusätzlich durchgeführten Abtastvorgang oder Prüfvorgang zu Analysezwekken.

Weitere Vorteile sowie Einzelheiten der erfindungsgemäßen Lösung ergeben sich aus der nachfolgenden Beschreibung von Ausführungsbeispielen anhand der beiliegenden Zeichnungen.
Hierbei zeigt
- Figur 1: eine schematische Prinzip-Darstel- lung der erfindungsgemäßen Positi- onsmeßeinrichtung;
- Figur 2: einen Teil einer ersten Ausführungs- form der erfindungsgemäßen Posi- tionsmeßeinrichtung;
- Figur 3a und 3b: je eine schematisiert dargestellte Möglichkeit zur Analyse der übertra- genen Informationen in der Ausfüh- rungsform der Figur 2;
- Figur 4: eine schematische Darstellung ei- ner zweiten Ausführungsform der erfindungsgemäßen Positionsmeßeinrichtung;
- Figur 5a: eine schematische Teildarstellung einer dritten Ausführungsform der erfindungsgemäßen Positionsmeßeinrichtung;
- Figur 5b: eine schematische Darstellung zur Analyse der übertragenen Informa- tionen gemäß der Ausführungsform in Figur 5a.

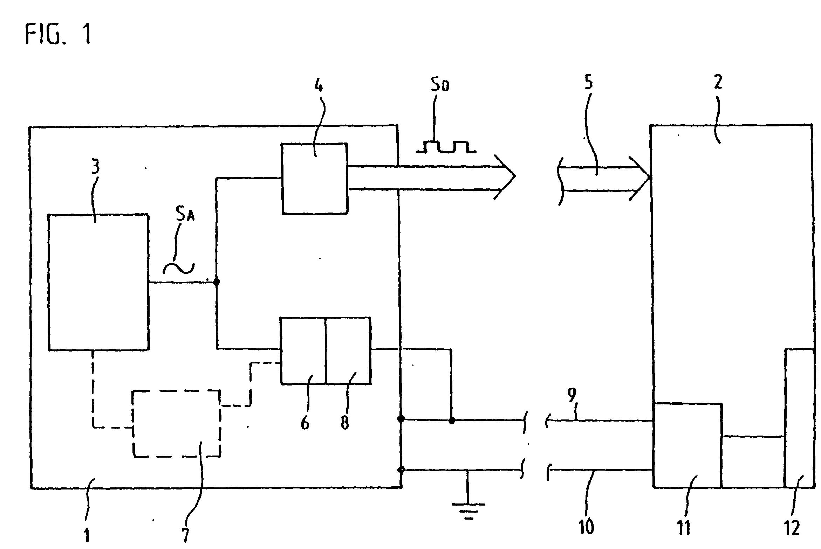

Anhand der schematisierten Darstellung von Figur 1 erfolgt eine Beschreibung des erfindungsgemäßen Verfahrens bzw. der erfindungsgemäßen Vorrichtung.
Die erfindungsgemäße Positionsmeßeinrichtung umfaßt hierbei das eigentliche Meßsystem (1) sowie eine dem Meßsystem (1) nachgeordnete Auswerte- und Versorgungseinheit (2). Die in Figur 1 gewählte Darstellung der Auswerte- und Versorgungseinheit (2) ist selbstverständlich lediglich in schematischer Form zu verstehen, d.h. es ist keineswegs erfindungswesentlich, daß die verschiedenen Auswerte- und Versorgungskomponenten innerhalb derselben Baueinheit untergebracht sind.
Das Meßsystem (1) liefert ausgangsseitig positionsabhängige Signale S_{D}, die über Signal-Übertragungsleitungen an die nachgeordnete Auswerte- und Versorgungseinheit (2) weiterverarbeitet werden. Die übertragenen Signale S_{D} liegen im dargestellten Ausführungsbeispiel in digitaler Form vor und werden aus ursprünglich analogen Abtastsignalen S_{A} gebildet, die von einer Abtasteinheit (3) innerhalb des Meßsystems (1) erzeugt werden. In einer möglichen Ausführungsform ist das Meßsystem (1) etwa als Längenmeßsystem realisiert, das positionsabhängige Signale bezüglich der Relativposition eines Werkzeuges und eines Werkstückes liefert und diese Signale an eine nachgeordnete Werkzeugmaschinensteuerung übermittelt.

Die eigentliche Erzeugung der positionsabhängigen Signale innerhalb des Meßsystems (1) kann auf vielfältigste Art und Weise erfolgen, beispielsweise durch die optoelektronische Abtastung einer Maßstabsteilung mit Hilfe eines Abtastgitters und die Erfassung der resultierenden periodischen Signalmodulation über Photoelemente. Daneben können selbstverständlich auch andere Meßprinzipien innerhalb der erfindungsgemäßen Vorrichtung bzw. in Verbindung mit dem erfindungsgemäßen Verfahren eingesetzt werden, die positionsabhängige analoge Abtastsignale liefern, beispielsweise magnetische, induktive oder kapazitive Meßverfahren. Ebenso ist es selbstverständlich möglich, sowohl Positionsmeßeinrichtungen zur Längen- als auch zur Winkelmessung erfindungsgemäß auszubilden.
Ferner ist sowohl die Realisierung inkrementaler als auch absoluter Meßsysteme in der erfindungsgemäßen Art und Weise möglich.
Zu den verschiedenen bekannten Möglichkeiten zur Meßwerterzeugung sei an dieser Stelle z.B. auf die Seiten 8-29 in dem Buch "Digitale Längen- und Winkelmeßtechnik", von A. Ernst, Verlag moderne industrie AG Landsberg, 3. Auflage 1993 verwiesen.

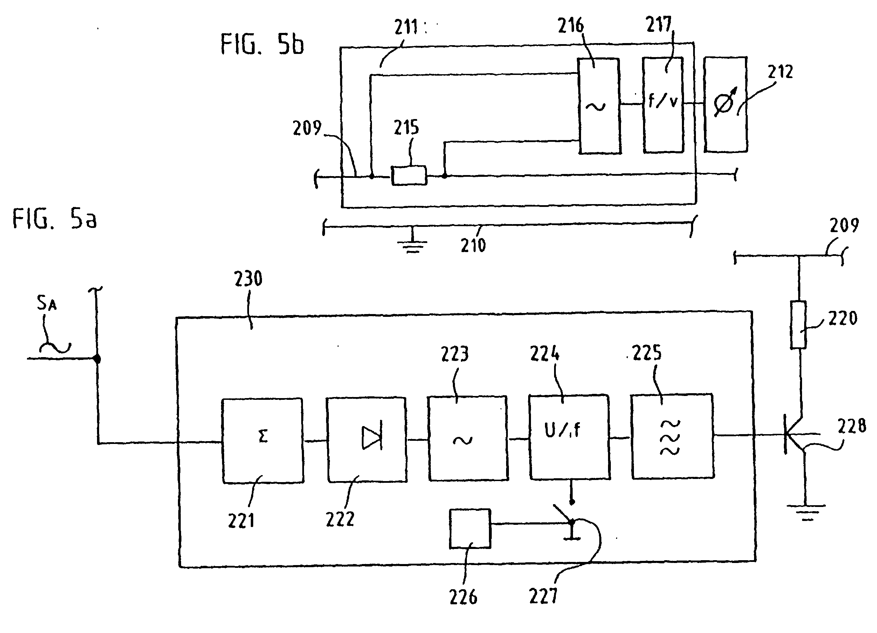

Die von der Abtasteinheit (3) innerhalb des Meßsystemes (1) erzeugten analogen Abtastsignale (S_{A}) werden anschließend innerhalb einer dem Meßsystem (1) zugeordneten Verarbeitungseinheit (4) digitalisiert. Die digitalisierten Abtastsignale (S_{D}) können nunmehr zur weiteren Auswertung über die Signal-Übertragungsleitungen (5) z.B. in Form von TTL-Pulsen zur Auswerte- und Versorgungseinheit (2) übertragen werden. Alternativ hierzu ist es auch möglich, die digitalisierten Abtastsignale bereits innerhalb des Meßsystems (1) weiterzuverarbeiten, beispielsweise zu interpolieren, so daß ausgangsseitig inkrementale Zählpulse vorliegen und in digitaler Form an die Auswerte- und Versorgungseinheit (2) übertragen werden können.
Wie bereits angedeutet, können die derart aufbereiteten und übertragenen digitalen Signale (S_{D}) auswerteseitig nicht mehr herangezogen werden, um etwa die Qualität der ursprünglichen analogen Abtastsignale (S_{A}) ausreichend zu beurteilen, z.B. ob eine ausreichende Signalamplitude derselben vorliegt etc.. Die zu übertragenden, meßsystem-bezogenen Informationen betreffen in diesem Ausführungsbeispiel demzufolge die Qualität der analogen Abtastignale. Im Fall der direkten Übertragung von analogen Abtastsignalen an die Auswerte- und Versorgungseinheit (2) könnten diese beispielsweise ohne Schwierigkeiten zu Diagnosezwekken am Stecker der Signal-Übertragungsleitungen abgegriffen werden. Eventuell vorliegende Fehlfunktionen bei der Erzeugung der analogen Abtastsignale (S_{A}) können im Fall der alleinigen Übertragung digitaler Signale hingegen erst beim kompletten Ausfall der Signalübertragung erkannt werden.
Erfindungsgemäß ist deshalb seitens des Meßsystemes (1) vorgesehen, die analogen Abtastignale (S_{A}) ferner auch einer Diagnoseeinheit (6) zuzuführen. Die Diagnoseeinheit (6) übernimmt dabei die Aufgabe, Informationen zu den analogen Abtastsignalen (S_{A}) zu erzeugen, die diese charakterisieren. Bei den von der Diagnoseeinheit (6) erzeugten Informationen kann es sich um die Ermittlung der jeweiligen Signalamplitude sowie des vorhandenen Offsets ebenso handeln wie um eine eventuelle Nullpunktsbestimmung, die Phasenlagen-Überprüfung eines sin- und eines cos-förmigen Signales u.v.m.. Beispielsweise läßt sich in dieser Form die korrekte Montage einer Abtasteinheit relativ zu einer damit abgetasteten Maßstabsteilung überprüfen, da nur bei korrekter Ausrichtung derselben eine maximale Signalamplitude resultiert. Darüber hinaus ist die Diagnoseeinheit (6) in der Lage zu überprüfen, ob bestimmte Signalanforderungen innerhalb definierter, vorgegebener Grenzwerte eingehalten werden. Je nachdem, ob bestimmte Anforderungen eingehalten werden oder nicht, wird von der Diagnoseeinheit (6) ein dieser Information entsprechendes Signal generiert. Die Diagnoseeinheit (6) kann für diese Zwecke in vielfältigster Form soft- und/oder hardwaremäßig ausgeführt werden; eine konkrete Variante wird später anhand der Figur 5 noch näher erläutert.

Optional kann auch vorgesehen werden, innerhalb des Meßsystems (1) eine zusätzliche Prüfeinheit (7) anzuordnen, die lediglich bestimmte, interessierende Diagnose-Informationen unabhängig von den analogen Abtastsignalen erzeugt, was in Figur 1 über die Darstellung der Prüfeinheit (7) mittels durchbrochener Linien angedeutet werden soll. In diesem Fall dienen als Eingangssignal der Diagnoseeinheit (6) demnach nicht nur die analogen Abtastsignale (S_{A}) sondern zusätzlich oder aber alleinig die von der Prüfeinheit (7) erzeugten Signale. Bei der konkreten Ausführung der Prüfeinheit (7) kann es sich beispielsweise um eine zusätzlich vorgesehene Abtasteinheit handeln, die eine separate Maßstabsspur zu Diagnosezwecken abtastet.

Mit der Diagnoseeinheit (6) ist innerhalb der erfindungsgemäßen Positionsmeßeinrichtung eine Signal-Aufbereitungseinheit (8) ausgangsseitig verbunden. Diese übemimmtdie Funktion der Aufbereitung der generierten Diagnose-Informationen, damit diese über ein oder mehrere Versorgungsleitungen (9, 10) des Meßsystems (1) zur nachgeordneten Auswerte- und Versorgungseinheit (2) übertragen werden können. Zu diesem Zweck ist die Signal-Aufbereitungseinheit (8) mit mindestens einer der Versorgungsleitungen (9, 10) verbunden, in der Darstellung der Figur 1 mit der spannungsführenden Leitung (9). Zur Übertragung der interessierenden, meßsystem-bezogenen Informationen an die Auswerte- und Versorgungseinheit (2) dienen erfindungsgemäß demnach die bereits vorhandenen Versorgungsleitungen (9, 10) des Meßsystems (1), über die die Spannungsversorung der einzelnen Komponenten des Meßsystems (1) erfolgt. Separate zusätzliche Verbindungen zur Signalübermittlung sind demzufolge nicht mehr erforderlich. In der schematisiert dargestellten Ausführungsform der Figur 1 sind insgesamt zwei Versorgungsleitungen (9, 10) zwischen dem Meßsystem (1) und der Auswerte und Versorgungseinheit (2) vorgesehen, von denen eine (10) als Masseverbindung dient, während an der anderen (9) die erforderliche Betriebsspannung des Meßsystemes (1) bzw. einzelner Meßsystem-Komponenten anliegt.

Auch für die Ausgestaltung der Signataufbereitungseinheit (8) und die Art und Weise der Übertragung meßsystem-bezogenen Informationen existieren eine Reihe von Möglichkeiten, von denen einige Varianten im Verlauf der Beschreibung noch näher erläutert werden. Sämtlichen dieser Ausführungsformen der SignalAufbereitung ist jedoch gemeinsam, daß die jeweiligen Informationen in Form definiert-codierter Signale auf ein oder mehreren der Versorgungsleitungen (9, 10) übertragen werden. Die entsprechende Codierung der Signale bzw. Informationen für die Übertragung wird hierbei von der Signal-Aufbereitungseinheit (8) übernommen. Für die eigentliche Codierung wiederum stehen eine Reihe verschiedenster bekannter Verfahren zur Verfügung, wie etwa Strom- und/oder Spannungsmodulations-Verfahren, Frequenz- und/oder Amplitudenmodulations-Verfahren, die Vornahme definierter Änderungen in der Stromaufnahme des Meßsystems in Abhängigkeit der jeweiligen Informationen etc.. Beispielsweise ist es derart möglich die jeweiligen Signalamplituden der analogen Abtastsignale S_{A} frequenzmoduliert zu übertragen.

Zur Decodierung und eigentlichen Analyse der derart übertragenen Informationen ist der Auswerte- und Versorgungseinheit (2) eingangsseitig eine Analyse-Einheit (11) zugeordnet. Auch für die Analyse-Einheit (12) existieren eine Reihe von Möglichkeiten der konkreten Ausführung, die selbstverständlich jeweils von der gewählten Art der Signalaufbereitung und -Übertragung abhängt. Auch hierzu sei auf die folgende Beschreibung von Ausführungsbeispielen verwiesen.

Mit der Analyse-Einheit (11) ausgangsseitig verbunden ist desweiteren eine Anzeige-Einheit (12), die zur visuellen Darstellung der übertragenen Informationen dient. Hierbei existieren für die Anzeige-Einheit (12) verschiedene Ausführungsformen. Möglich ist für detaillierte Auswertungsanforderungen etwa der Einsatz eines Bildschirmes; einfacher aufgebaute AnzeigeEinheiten (12) können auch als Digital-Anzeigen ausgeführt sein oder mit Hilfe von LEDs realisiert werden usw..

Mit Hilfe der erfindungsgemäßen Vorrichtung bzw. des erfindungsgemäßen Verfahrens ist es demzufolge möglich, dem Anwender interessierende, meßsystem-bezogene Informationen, z.B. bezüglich der analogen Abtastsignale S_{A}, auf der Auswerteseite zur Verfügung zu stellen, ohne daß ein erhöhter Aufwand zur Bereitstellung von entsprechenden Übertragungsleitungen resultiert. Dies kann beispielsweise zu Montagezweckenvordem eigentlichen Einsatz des Meßsystems erforderlich sein oder aber auch später während des Meßbetriebes zur Erkennung eventueller System-Fehlfunktionen erfolgen. In diesem Fall sollte lediglich gewährleistet sein, daß die Erzeugung und die Übertragung der eigentlichen positionsabhängigen Signale von der Übertragung der Informationen auf der Versorgungsleitung möglichst gering beeinflußt wird. Dies kann beispielsweise sichergestellt werden, indem langsame Anstiegszeiten der entsprechenden Signale gewählt werden.

Neben dem beschriebenen Einsatz in Meßsystemen, die lediglich digitale Ausgangssignale liefern, kann die erfindungsgemäße Lösung grundsätzlich auch in Meßsystemen eingesetzt werden, die ausgangsseitig analoge Signale zur Auswerteeinheit übertragen.

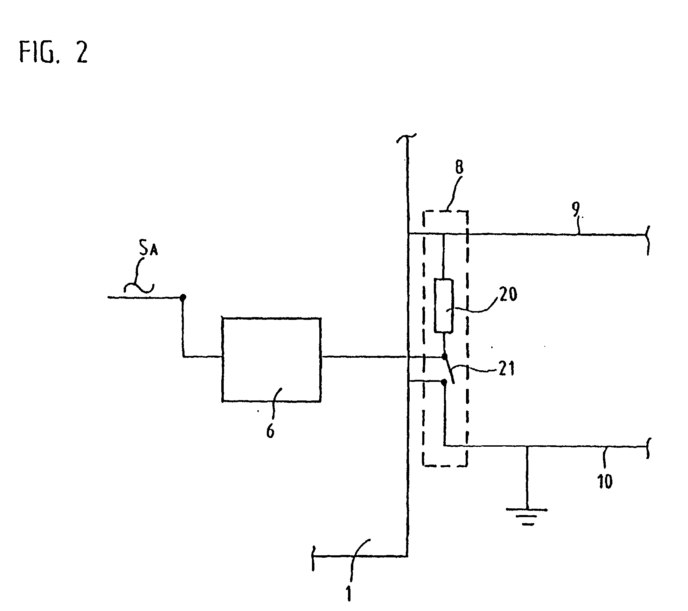

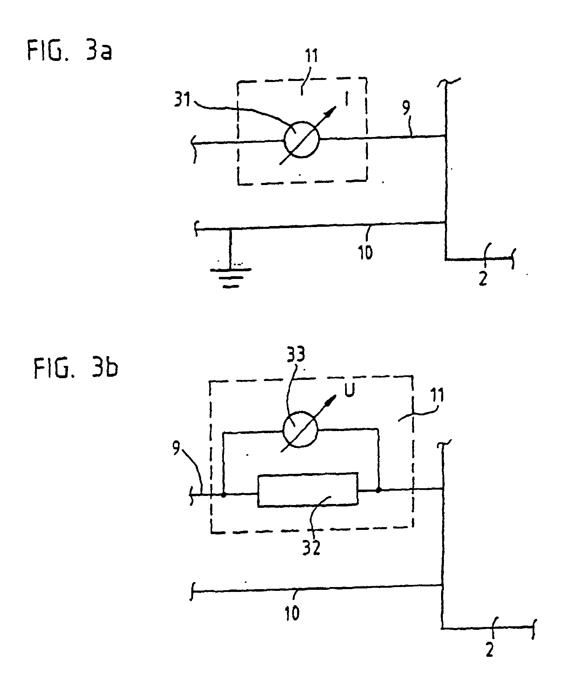

Anhand der Figuren 2 sowie 3a und 3b erfolgt nunmehr die Beschreibung einer möglichen Ausführungsform der Signalaufbereitungseinheit innerhalb der erfindungsgemäßen Vorrichtung sowie von in Verbindung damit einsetzbaren Analyseeinheiten. Hierbei werden die funktionsgleichen Komponenten mit den identischen Bezugszeichen versehen wie in Figur 1.
Die von der nicht-dargestellten Abtasteinheit erzeugten analogen Abtastsignale S_{A} gelangen wie vorab beschrieben auf die Diagnoseeinheit (6) innerhalb des Meßsystems (1). Dort erfolgt beispielsweise eine Diagnose dergestalt, daß überprüft wird, ob die Signalamplituden innerhalb eines vorgegebenen Bereiches liegen. Die meßsystem-bezogenen Informationen betreffen in dieser Ausführungsform demnach die Qualität der analogen Abtastignale. Ausgangsseitig liefert die Diagnoseeinheit in diesem Fall dann ein Signal, das die Information beinhaltet, ob der vorgegebene Ampitudenbereich eingehalten wird, d.h. es liegen ausgangsseitig dann lediglich zwei mögliche Informationszustände vor, die über die Versorgungsleitung zu übertragen sind. Zu diesem Zweck umfaßtdie der Diagnoseeinheit (6) nachgeordnete Signalaufbereitungseinheit (8) einen elektrischen Widerstand (20) sowie ein Schaltelement (21). Der elektrische Widerstand (20) kann dabei über das von der Diagnoseeinheit (6) betätigbare Schaltelement (21) zwischen die beiden in Figur 1 beschriebenen Versorgungsleitungen (9, 10) geschaltet werden. Beispielsweise kann dann etwa im Fall einer nicht ausreichenden Signalamplitude der analogen Abtatssignale S_{A} das Schaltelement (21) betätigt werden. Die Codierung der zu übertragenden Informationen erfolgt in dieser Ausführungsform demnach durch die definierte Änderung der Stromaufnahme des Meßsystems (1), indem der entsprechende Widerstand (20) zugeschaltet wird, wenn ein Unterschreiten bestimmter Amplituden-Schwellwerte resultieren sollte.
Bei einer solchen Codierung der Signale muß zudem sichergestellt sein, daß ein zu hoher Spannungsabfall auf den Versorgungsleitungen (9, 10) vermieden wird, um die Funktionsfähigkeit des Meßsystems (1) weiterhin sicherzustellen. Dies bedeutet, daß die zusätzliche Stromaufnahme des Meßsystems (1) aufgrund des zusätzlichen Widerstandes (20) nicht zu groß werden darf, was durch die entsprechende Dimensionierung des Widerstandes gewährleistet werden kann. Alternativ ist es möglich, eine konstante Spannungsversorgung des Meßsystems (1) über eine entsprechende Spannungsregelung mit Hilfe einer - nicht dargestellten - geeigneten Regelungseinheit sicherzustellen.

Wie im Fall einer derartigen Ausführung der Signal-Codierung bzw. der Signal-Aufbereitungseinheit (8) die Analyse seitens der Auswerte- und Versorgungseinheit erfolgen kann, soll anhand der Figuren 3a und 3b erläutert werden.

In einer ersten Ausführungsform umfaßt die Analyseeinheit (11) hierzu ein Strommessgerät (31), mit dem die Stromaufnahme des Meßsystems (1) überprüfbar ist. Wird demzufolge im Fall der vorher erwähnten Unterschreitung der Schwellwert-Amplituden der Widerstand (20) zwischen die Versorgungsleitungen geschaltet, so ergibt sich eine deutlich höhere Stromaufnahme, die am Strommessgerät (31) der Analyseeinheit (11) detektierbar ist. Eine mögliche Ausführungsform einer hierzu geeigneten Anzeigeeinheit könnte beispielsweise als Zeigermeßgerät ausgeführt sein.

Bei der in Figur 3b dargestellten Ausführungsform der Analyseeinheit (11) umfaßt diese einen in eine Versorgungsleitung (9) geschalteteten Widerstand (32), über dem mittels eines Spannungsmeßgerätes (33) die daran abfallende Spannung gemessen wird. Die dabei gemessene Spannung ist proportional zur Stromaufnahme des Meßsytems, die wie vorab beschrieben durch Hinzuschalten des Widerstandes (20) definiert veränderbar ist.

Die beiden Möglichkeiten zur Ausführung der Analyseeinheit gemäß Figur 3a und 3b könnten in einen - nicht dargestellten - Stecker der Versorgungsleitungen (9, 10) integriert sein, so daß sich derart besonders einfach aufgebaute Varianten der vorliegenden Erfindung ergeben. Mit dem Strom- (31) bzw. Spannungsmeßgerät (33) aus diesen Ausführungsbeispielen könnten beispielsweise LEDs verbunden und in den Stecker integriert werden, die die Funktion der Anzeigeeinheit übernehmen und beim Unterschreiten bestimmter Amplituden-Schwellwerte ein optisches Signal liefern.

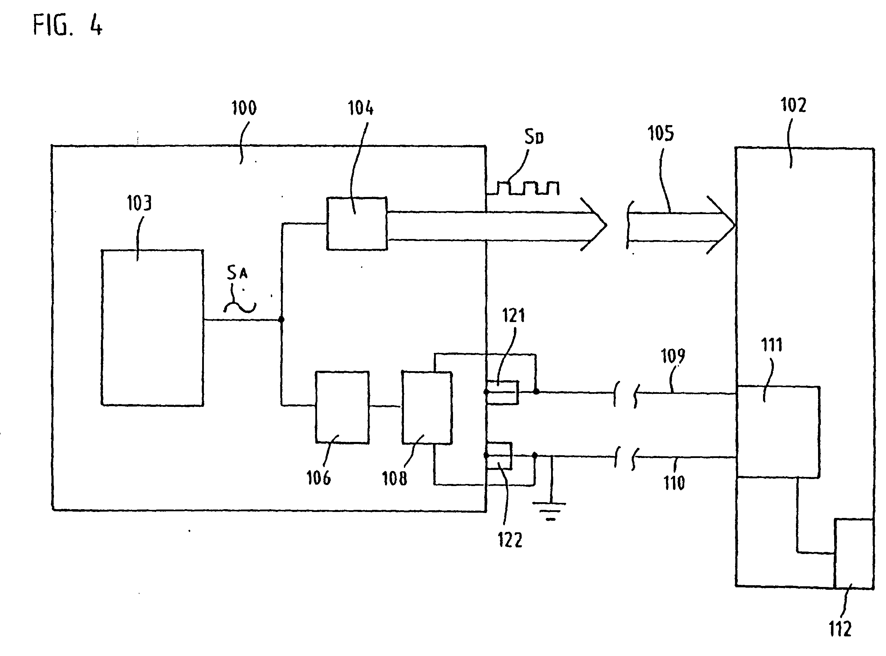

Eine zweite mögliche Ausführungsform der erfindungsgemäßen Positionsmeßeinrichtung sei im folgenden anhand der Figur 4 erläutert. Der grundsätzliche Aufbau des Meßsystems (100) mit Abtasteinheit (103), Verabeitungseinheit (104) und Diagnoseeinheit (106) entspricht grundsätzlich dem des vorab beschriebenen Ausführungsbeispiels. Ebenso wie dort ist eine über Signal-Übertragungsleitungen (105) und Versorgungsleitungen (109, 110) damit verbundene Auswerte- und Versorgungseinheit (102) vorgesehen. Letzter umfaßt ebenfalls wiederum eine Analyseeinheit (111) sowie eine Anzeigeeinheit (112).

Im Gegensatz zum zuletzt beschriebenen Ausführungsbeispiel ist die Signal-Aufbereitungseinheit (108) nunmehr als Modulator ausgeführt, mit dessen Hilfe eine Strom- oder Spannungsmodulation der auf den Versorgungsleitungen (109, 110) zu übertragenden Signale möglich ist. Die definierte Codierung der zu übertragenden Informationen bezüglich der analogen Abtastsignale (S_{A}), welche von der Diagnoseeinheit (106) erzeugt werden, erfolgt demzufolge über die Modulation von Strom oder Spannung auf den Versorgungsleitungen (109, 110). Bei einerderartigen Ausführung der Signal-Aufbereitungseinheit (108) sind zudem an den Meßsystem-Eingängen für die Versorgungsleitungen (109, 110) Filterelemente (121, 122) angeordnet, um trotz der erfolgenden Modulation von Strom oder Spannung auf diesen Leitungen (109, 110) eine störungsfreie Strom- und Spannungsversorgung des Meßsystems (100) sicherzustellen. Mittels geeigneter elektrischer Filter oder Spannungsstabilisatoren als Filterelementen (121, 122) läßt sich die erforderliche Trennung deraufmodulierten Signale vom Meßsystem (100) gewährleisten.
Die Analyseeinheit (111) auf Seiten der Auswerteeinheit (102) muß dann selbstverständlich auf diese Art und Weise der Informationscodierung und - Übertragung ausgelegt sein und eine entsprechende Signal-Demodulation ermöglichen.

Eine dritte Möglichkeit zur Ausführung der erfindungsgemäßen Positionsmeßeinrichtung wird im folgenden anhand der Figuren 5a und 5b erläutert.
Hierbei ist in Figur 5a lediglich der Teil des Meßsytems dargestellt, der die Diagnose- und Signal-Aufbereitungseinheit (230) enthält; die restlichen Komponenten des Meßsystems entsprechen denen der vorhergehenden Ausführungsbeispiele. Die Diagnose- und Signal-Aufbereitungseinheit (230) sind hierbei in einer gemeinsamen Komponente des Meßsystems angeordnet.
Erneut gelangen die analogen Abtastsignale (S_{A}) auf den Eingang der Diagnose- und Signal-Aufbereitungseinheit (230), wo aus den beiden um 90° phasenversetzten, sinus- und cosinusförmigen Signalen in einer Addierstufe (221) zunächst ein Summensignal gebildet wird. Das resultierende Summensignal wird anschließend in einer Gleichrichterstufe (222) gleichgerichtet und in einem Tiefpaß (223) gefiltert. Die am Ausgang des Tiefpasses (222) anliegende Spannung U_{S} ist proportional zur Amplitude des Summensignales aus den beiden analogen Abtastsignalen. Im nachgeordneten Spannungs-Frequenz-Wandler (224) wird diese Spannung U_{S} in ein sinus-, rechteck- oder dreieckförmiges Signal mit einer Frequenz umgesetzt, die wiederum proportional zur Spannung U_{S} ist. Dieses Signal kann anschließend noch verstärkt, mittels eines Bandpasses (225) gefiltert und auf die Versorgungsleitung (209) geschaltet werden. Hierzu ist der Ausgang des Bandpasses (225) mit einem als Transistor ausgeführten Schaltelement (228) verbunden, der wiederum einen geeignet dimensionierten Widerstand (220) in eine der Versorgungsleitungen (209) schaltet.
Es ergibt sich somit eine zeitabhängige Variation der Stromaufnahme des Meßsystemes mit einer Frequenz, die proportional zur Amplitude des Summensignales aus den analogen Abtastsignalen ist.
Ferner ist innerhalb dieser Ausführungsform vorgesehen, mittels eines weiteren Schaltelementes (227), das wiederum über einen Zeitschalter (226) betätigt wird, diese Art der Signalübertragung lediglich eine bestimmte Zeit, beispielsweise zu Beginn des Meßbetriebes aufrechtzuerhalten und anschließend abzuschalten.

Figur 5b zeigt eine Möglichkeit, wie im Fall der Signalaufbereitung gemäß Figur 5a die Decodierung und Analyse der übertragenen Signale auf Seiten der Auswerte- und Versorgungseinheit erfolgen kann bzw. die Analyse-(211) und Anzeigeeinheit (212) ausgeführt werden kann.
Die Analyseeinheit (211) umfaßt hierzu einen, in die spannungsführende Versorgungsleitung (209) geschalteteten elektrischen Widerstand (215), über dem die Spannung abgegriffen wird. Die am Widerstand (215) abfallende Spannung verhält sich hierbei proportional zur Stromaufnahme des Meßgerätes, die sich wie in Figur 5a erläutert mit einer bestimmten Frequenz ändert. Zur Signalverarbeitung wird mittels einer Verstärkerstufe (216) das Spannungssignal sowohl verstärkt als auch bandpaßgefiltert. Im nachgeordneten Frequenz-Spannungs-Wandler (217) erfolgt die Erzeugung einer der Frequenz proportionalen Spannung, die als Träger der übermittelten Informationen dient. Die derart ermittelte Spannung wiederum ist bei einer Signalerzeugung gemäß Figur 5a proportional zur Amplitude des Summensignales der beiden analogen, sinus- und cosinusförmigen Abtastsignale. Über eine ausgangsseitig mit dem Frequenz- Spannungs-Wandler (217) verbundene Anzeigeeinheit (212) kann das Spannungssignal visualisiert werden.
Alternativ zu dieser Art der Signalanalyse ist es möglich, die über einem Widerstand in der Versorgungsleitung abfallende Spannung beispielsweise an einem Oszilloskop anzuzeigen.

Neben den beschriebenen Möglichkeiten der Diagnose und Signalaufbereitung sowie -Analyse und Anzeige existieren selbstverständlich weitere Ausführungsvarianten im Rahmen des erfindungsgemäßen Verfahrens bzw. der erfindungsgemäßen Vorrichtung.

## Patentansprüche

1. Verfahren zur Übertragung von Informationen zwischen dem Messsystem (1; 100) einer Positionsmesseinrichtung und einer über mindestens eine Versorgungsleitung (9, 10; 109, 110; 209, 210) damit verbundenen Auswerte- und Versorgungseinheit (2; 102), wobei das Messsystem (1; 100)
- eine Abtasteinheit (3; 103) umfasst, über die positionsabhängige, analoge Abtastsignale (S_{A}) erzeugt werden und
- eine Verarbeitungseinheit (4) umfasst, über die die analogen Abtastsignale (S_{A}) digitalisiert werden und
- eine Diagnoseeinheit (6; 106) umfasst, über die messsystem-bezogene Informationen erzeugt werden, welche auf die Qualität der analogen Abtastsignale (S_{A}) bezogen sind und
- dass eine Übertragung der messsystem-bezogenen Informationen über eine Versorgungsleitung (9, 10; 109, 110; 209, 210) zwischen der Abtasteinheit und der Auswerte- und Versorgungseinheit (2; 102) erfolgt, über die eine Spannungsversorgung des Messsystems erfolgt, während die digitalisierten Abtastsignale (S_{D}) über Signal-Übertragungsleitungen (5) an die Auswerte- und Versorgungseinheit (2) übertragen werden.

2. Verfahren nach Anspruch 1, wobei zur Informations-Übertragung eine Signal-Codierung auf Seiten des Messsystemes (1; 100) der Positionsmesseinrichtung über eine Signalaufbereitungseinheit (8; 108) vorgenommen wird, die mit der Diagnoseeinheit (6; 106) verbunden ist.

3. Verfahren nach Anspruch 2, wobei die Signal-Codierung in Form einer Strom- oder Spannungsmodulation der zu übertragenden Signale vorgenommen wird.

4. Verfahren nach Anspruch 2, wobei die Codierung in Form einer definierten Änderung der Stromaufnahme der Abtasteinheit (3; 103) vorgenommen wird.

5. Verfahren nach Anspruch 1, wobei eine Übertragung von Informationen stets für eine bestimmte vorwählbare Zeit erfolgt.

6. Verfahren nach Anspruch 2, wobei seitens der Auswerte- und Versorgungseinheit (2; 102) mit Hilfe einer Analyse-Einheit (11; 111; 211) die codierten Signale decodiert und analysiert werden.

7. Verfahren nach Anspruch 6, wobei die Decodierung und Analyse der übertragenen Signale über eine Messung des Stromes in der Versorgungsleitung (9, 10; 109, 110) erfolgt.

8. Verfahren nach Anspruch 1, wobei die übertragenen Informationen die Amplituden der analogen Abtastsignale (S_{A}) betreffen.

9. Positionsmesseinrichtung mit einem Messsystem (1; 100), das eine Abtasteinheit (3; 103) umfaßt sowie eine über mindestens eine Versorgungsleitung (9, 10; 109, 110; 209, 210) mit dem Messsystem (1; 100) verbundene Auswerte- und Versorgungseinheit (2; 102), wobei seitens des Meßsystemes (1; 100) eine Diagnose-Einheit (6; 106) angeordnet ist, die messsystem-bezogene Informationen erzeugt, die auf die Qualität der analogen Abtastsignale (S_{A}) bezogen sind und ferner seitens des Meßsystems eine Verarbeitungseinheit (4) angeordnet ist, über die analogen Abtastsignale (S_{A}) digitalisierbar sind und dem Messsystem (1; 100) eine Signalaufbereitungseinheit (8; 108) zugeordnet ist, die die messsystem-bezogenen Informationen derart aufbereitet, dass diese Informationen definiert-codiert über eine Versorgungsleitung (9, 10; 109, 110; 209, 210) zwischen der Abtasteinheit und der Auswerte- und Versorgungseinheit (2; 102) übertragbar sind, über die eine Spannungsversorgung des Messsystems erfolgt, während eine Übertragung der digitalisierten Abtastsignale (S_{D}) über Signal-Übertragungsleitungen (5) an die Auswerte- und Versorgungseinheit (2) erfolgt.

10. Positionsmesseinrichtung nach Anspruch 9, wobei die Signalaufbereitungseinheit (8; 108) eine Codierung der Informationen in Form einer Strom- oder Spannungsmodulation der zu übertragenden Signale vornimmt.

11. Positionsmesseinrichtung nach Anspruch 10, wobei die Signalaufbereitungseinheit (8) derart ausgeführt ist, daß sie eine definierte Änderung der Stromaufnahme des Messsystemes (1) bewirkt.

12. Positionsmesseinrichtung nach Anspruch 11, wobei die Signalaufbereitungseinheit (8) einen wahlweise in die Versorgungsleitung (9, 10) einschaltbaren elektrischen Widerstand (20) umfasst.

13. Positionsmesseinrichtung nach Anspruch 11, wobei eine Regelungseinheit vorgesehen ist, die eine konstante Versorgungsspannung des Messsystems (1; 100) sicherstellt.

14. Positionsmesseinrichtung nach Anspruch 10, wobei die Signalaufbereitungseinheit (8; 108) eine Modulation der an der Versorgungsleitung (9, 10; 109, 110) anliegenden Spannung bewirkt.

15. Positionsmesseinrichtung nach Anspruch 9, wobei seitens der Auswerte- und Versorgungseinheit (2; 102) eine Analyse-Einheit (11; 111; 211) angeordnet ist, welche die übertragenen Signale decodiert und analysiert.

16. Positionsmesseinrichtung nach Anspruch 15, wobei der Analyse-Einheit (11; 111; 211) eine Anzeige-Einheit (12; 112; 212) zugeordnet ist, die eine visuelle Darstellung der übertragenen Informationen übernimmt.

17. Positionsmesseinrichtung nach Anspruch 15, wobei Analyse-Einheit (11) als Strommessgerät (31) ausgeführt ist, das in die Versorgungsleitung (9) geschaltet ist.

## Claims

1. A method of transferring information between the measuring system (1; 100) of a position measuring device and an evaluating and supply unit (2; 102) connected thereto by means of at least one supply line (9, 10; 109, 110; 209, 210), wherein the measuring system (1; 100)
- comprises a sensing unit (3; 103), through which position-dependent analog sensing signals (S_{A}) are generated and
- comprises a processing unit (4) through which the analog sensing signals (S_{A}) are digitised and
- comprises a diagnostic unit (6; 106) through which the information relating to the measuring system is generated, which is related to the quality of the analog sensing signals (S_{A}) and
- that transfer of the information relating to the measuring system takes place over a supply line (9, 10; 109, 110; 209, 210) between the sensing unit and the evaluating and supply unit (2; 102), through which a voltage supply of the measuring system is effected, while the digitised sensing signals (S_{D}) are transferred to the evaluating and supply unit (2) over signal transmission lines (5).

2. A method according to claim 1, wherein a signal coding is effected on the side of the measuring system (1; 100) of the position measuring device for the information transfer by means of a signal processing unit (8; 108) which is connected to the diagnostic unit (6; 106).

3. A method according to claim 2, wherein the signal coding is effected in the form of current or voltage modulation of the signals to be transferred.

4. A method according to claim 2, wherein the coding is effected in the form of a defined change in the current consumption of the sensing unit (3; 103).

5. A method according to claim 1, wherein a transfer of information always takes place for a specific, selectable time.

6. A method according to claim 2, wherein the coded signals are decoded and analysed on the side of the evaluating and supply unit (2; 102) with the aid of an analysis unit (11, 111; 211).

7. A method according to claim 6, wherein the decoding and analysis of the transferred signals is effected by measuring the current in the supply line (9, 10; 109, 110).

8. A method according to claim 1, wherein the transferred information relates to the amplitudes of the analog sensing signals (S_{A}).

9. A position measuring device with a measuring system (1; 100), which comprises a sensing unit (3; 103) and an evaluating and supply unit (2; 102) connected to the measuring system (1; 100) through at least one supply line (9, 10; 109, 110; 209, 210), wherein a diagnostic (6; 106) is arranged on the side of the measuring system (1; 100) and generates information relating to the measuring system, which relates to the quality of the analog sensing signals (S_{A}), and furthermore on the side of the measuring system there is arranged a processing unit (4) through which analog sensing signals (S_{A}) can be digitised, and a signal processing unit (8; 108) is associated with the measuring system (1; 100) and so processes the information relating to the measuring system that this information can be transferred with a defined coding over a supply line (9, 10; 109, 110; 209, 210) between the sensing unit and the evaluating and supply unit (2; 102), through which a voltage supply of the system is effected, while transfer of the digitised sensing signals (S_{D}) is effected to the evaluating and supply unit (2) through signal transmission lines (5).

10. A position measuring device according to claim 9, wherein the signal processing unit (8; 108) effects coding of the information in the form of a current or voltage modulation of the signals to be transferred.

11. A position measuring device according to claim 10, wherein the signal processing unit (8) is so designed that it effects a defined change of the current consumption of the measuring system (1).

12. A position measuring device according to claim 11, wherein the signal processing unit (8) comprises an electrical resistance (20) which can be selectively switched into the supply line (9; 10).

13. A position measuring device according to claim 11, wherein a regulating unit is provided to ensure a constant supply voltage of the measuring system (1; 100).

14. A position measuring device according to claim 10, wherein the signal processing unit (8; 108) effects a modulation of the voltage present on the supply line (9, 10; 109, 110).

15. A position measuring device according to claim 9, wherein an analysis unit (11; 111; 211) is arranged on the side of the evaluating and supply unit (2; 102) and decodes and analyses the transferred signals.

16. A position measuring device according to claim 15, wherein a display unit (12; 112; 212) is associated with the analysis unit (11; 111; 211) and effects a visual display of the transferred information.

17. A position measuring device according to claim 15, wherein the analysis unit (11) is implemented as a current measuring device (31) which is connected in the supply line (9).

## Revendications

1. Procédé de transmission d'informations entre le système de mesure (1 ; 100) d'un dispositif de mesure de position et une unité de traitement et d'alimentation (2 ; 102) liée à ce dernier par l'intermédiaire d'au moins une ligne d'alimentation (9, 10 ; 109, 110 ; 209, 210), dans lequel le système de mesure (1 ; 100)
comprend une unité de palpage (3 ; 103) par l'intermédiaire de laquelle des signaux de palpage (S_{A}) analogiques dépendants de la position sont produits, et
comprend une unité de traitement (4), par l'intermédiaire de laquelle les signaux de palpage (S_{A}) analogique sont amenés sous une forme numérique, et
comprend une unité de diagnostic (6 ; 106) par l'intermédiaire de laquelle sont générées des informations relatives au système de mesure qui se rapportent à la qualité des signaux de palpage (S_{A}) analogiques, et
une transmission des informations relatives au système de mesure a lieu par l'intermédiaire d'une ligne d'alimentation (9, 10 ; 109, 110 ; 209, 210) entre l'unité de palpage et l'unité d'alimentation (2, 102) par laquelle une alimentation en tension du système de mesure est réalisée, tandis que les signaux de palpage numérisés (S_{D}) sont transmis à l'unité de traitement et d'alimentation (2) par l'intermédiaire de lignes de transmission de signal.

2. Procédé selon la revendication 1, dans lequel, pour la transmission d'informations, on opère un codage du signal côté système de mesure (1 ; 100) du dispositif du mesure de position, par l'intermédiaire d'une unité de préparation de signal (8 : 108) qui est reliée à l'unité de diagnostic (6 : 106).

3. Procédé selon la revendication 2, dans lequel le codage du signal est réalisé sous la forme d'une modulation de courant ou de tension des signaux à transmettre.

4. Procédé selon la revendication 2, dans lequel le codage est réalisé sous la forme d'une variation déterminée de la consommation de courant de l'unité de palpage (3 ; 103).

5. Procédé selon la revendication 1, dans lequel une transmission d'informations est toujours réalisée pour une durée déterminée présélectionnée.

6. Procédé selon la revendication 2, dans lequel côté unité de traitement et d'alimentation (2 ; 102), les signaux codés sont décodés et analysés à l'aide d'une unité d'analyse (11 ; 111 ; 211).

7. Procédé selon la revendication 6, dans lequel le décodage et l'analyse des signaux transmis sont réalisés par une mesure du courant dans la ligne d'alimentation (9, 10 ; 109, 110 ; 209, 210).

8. Procédé selon la revendication 1, dans lequel les informations transmises concernent les amplitudes des signaux de palpage (S_{A}) analogiques.

9. Dispositif de mesure de position avec un système de mesure (1 ; 100) qui comprend une unité de palpage (3 ; 103) ainsi qu'au moins une unité de traitement et d'alimentation (2 ; 102) qui est connectée au système de mesure (1 ; 100) par l'intermédiaire d'une ligne d'alimentation (9, 10 ; 109, 110 ; 209, 210), une unité de diagnostic (6 ;106) qui produit des informations relatives au système de mesure étant disposée côté système de mesure (1 ; 100) et en outre une unité de préparation de signal (8 ; 108) étant disposée côté système de mesure (1 ; 100), laquelle unité de préparation de signal met en forme les informations relatives au système de mesure de telle sorte que celles-ci puissent être transmises sous une forme codée donnée entre l'unité de palpage et l'unité de traitement et d'alimentation (2 ; 102), via une ligne d'alimentation (9, 10; 109, 110; 209, 210) par laquelle une alimentation en tension du système de mesure est réalisée, tandis qu'une transmission des signaux de palpage (S_{D}) numérisés à l'unité de traitement et d'alimentation (2) a lieu par l'intermédiaire de ligne de transmission de signal (5).

10. Dispositif de mesure de position selon la revendication 9, dans lequel l'unité de préparation de signal (8 ; 108) procède à un codage des informations sous la forme d'une modulation du courant ou de la tension des signaux à transmettre.

11. Dispositif de mesure de position selon la revendication 10, dans lequel l'agencement de l'unité de préparation de signal (8) est tel qu'elle génère une modification déterminée de la consommation de courant du système de mesure (1).

12. Dispositif de mesure de position selon la revendication 11, dans lequel l'unité de préparation de signal (8) comprend une résistance (20) électrique qui peut être insérée de manière sélective dans la ligne d'alimentation (9, 10).

13. Dispositif de mesure de position selon la revendication 11, dans lequel il est prévu une unité de régulation qui maintient une tension d'alimentation constante du système de mesure (1 ; 100).

14. Dispositif de mesure de position selon la revendication 10, dans lequel l'unité de préparation de signal (8 ; 108) génère une modulation de la tension appliquée à la ligne d'alimentation (9, 10 ; 109, 110).

15. Dispositif de mesure de position selon la revendication 9, dans lequel côté unité de traitement et d'alimentation (2 ; 102) est prévue une unité d'analyse (11 ; 111 ; 211) qui décode et analyse les signaux transmis.

16. Dispositif de mesure de position selon la revendication 15, dans lequel à l'unité d'analyse (11 ; 111 ; 211) est associée une unité d'affichage (12 ; 112 ; 212) qui assure une représentation visuelle des informations transmises.

17. Dispositif de mesure de position selon la revendication 15, dans lequel l'unité d'analyse (11) est réalisée sous la forme d'un appareil de mesure de courant (31) qui est inséré dans la ligne d'alimentation (9).
